(19) Europäisches Patentamt
European Patent Office
Office européen des brevets

(11) EP 4 395 382 A1

(12) EUROPEAN PATENT APPLICATION
published in accordance with Art. 153(4) EPC

(43) Date of publication:
03.07.2024 Bulletin 2024/27

(21) Application number: 22871810.2

(22) Date of filing: 07.09.2022

(51) International Patent Classification (IPC):
H04W 4/80 (2018.01)      H04W 48/10 (2009.01)
H04W 76/00 (2018.01)

(52) Cooperative Patent Classification (CPC):
H04W 4/80; H04W 48/10; H04W 48/16;
H04W 76/00

(86) International application number:
PCT/CN2022/117614

(87) International publication number:
WO 2023/045762 (30.03.2023 Gazette 2023/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.09.2021 CN 202111116493

(71) Applicant: Huawei Technologies Co., Ltd.
Shenzhen, Guangdong 518129 (CN)

(72) Inventors:
• QUAN, Chao
  Shenzhen, Guangdong 518129 (CN)
• LI, Mingchao
  Shenzhen, Guangdong 518129 (CN)
• HE, Qingchun
  Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **METHOD FOR ACCESSING SERVICE AND COMMUNICATION APPARATUS**

(57) Embodiments of this application disclose a service access method and a communication apparatus, applied to intelligent driving or assisted driving. The method includes: A first device obtains service structure information of a second device from the second device; the first device obtains a service structure hash value of the second device; the first device obtains first information from a third device, where the first information includes a service structure hash value of the third device; and when the service structure hash value of the second device is the same as the service structure hash value of the third device, the first device accesses a service of the third device. According to this method, time for the first device to access the service of the third device is reduced, and a transmission resource of the first device is also saved. Embodiments of this application may be applied to the internet of vehicles, for example, vehicle-to-everything V2X, long term evolution-vehicle LTE-V, and vehicle-to-vehicle V2V.

FIG. 2

EP 4 395 382 A1

**Description**

This application claims priority to Chinese Patent Application No. 202111116493.1, filed with the China National Intellectual Property Administration on September 23, 2021 and entitled "SERVICE ACCESS METHOD AND COMMUNICATION APPARATUS", which is incorporated herein by reference in its entirety.

**TECHNICAL FIELD**

This application relates to the field of communication technologies, and in particular, to a service access method and a communication apparatus.

**BACKGROUND**

Short-range communication plays an important role in people's daily life. For example, there is a requirement for short-range communication in the fields such as intelligent terminals, smart home, intelligent manufacturing, and intelligent vehicles. When a device A accesses a service of a device B for a first time, the device A needs to perform service discovery first, and can access the service of the device B only after a service structure of the device B is determined. A process of service discovery is as follows: The device A sends service discovery request information to the device B; after receiving the service discovery request information of the device A, the device B sends service structure information to the device A; and after receiving the service structure information, the device A buffers the service structure information of the device B.

If the device A needs to access services of a plurality of homogeneous devices, the device A needs to perform service discovery on each homogeneous device one by one. This consumes a large amount of time.

**SUMMARY**

Embodiments of this application provide a service access method and a communication apparatus, to help reduce time needed for accessing services of a plurality of homogeneous devices.

According to a first aspect, this application provides a service access method. The method includes: obtaining service structure information of a second device from the second device; obtaining a service structure hash value of the second device; obtaining first information from a third device, where the first information includes a service structure hash value of the third device; and when the service structure hash value of the second device is the same as the service structure hash value of the third device, accessing a service of the third device.

Based on the method, a first device does not need to obtain service structure information of the third device through service discovery, and can access the service of the third device only after determining that the service structure hash value of the third device is the same as the service structure hash value of the second device. This helps reduce time for the first device to access the service of the third device, and also saves a transmission resource. When the first device accesses services of a large quantity of homogeneous devices, time for accessing a service by the first device may be significantly shortened.

In a possible implementation, the obtaining first information from a third device specifically includes: sending a first request to the third device, where the first request is used to request the first information; and receiving the first information sent by the third device. Based on this implementation, the first device may actively obtain the first information at any time. This helps improve flexibility of obtaining the first information by the first device.

In a possible implementation, the obtaining first information from a third device specifically includes: receiving the first information broadcast by the third device. Based on this implementation, overheads of the first device can be reduced.

In a possible implementation, the obtaining a service structure hash value of the second device specifically includes: calculating the service structure information of the second device by using a hash function to obtain the service structure hash value of the second device. Based on this implementation, because the first device does not need to perform data transmission, the first device only needs to calculate the service structure information by using the hash function to obtain the service structure hash value of the second device. This helps save a transmission resource of the first device.

In a possible implementation, the obtaining a service structure hash value of the second device specifically includes: sending a second request to the second device, where the second request is used to request second information, and the second information includes the service structure hash value of the second device; and receiving the second information sent by the second device. Based on this implementation, the service structure hash value that is of the second device and that is obtained by the first device is sent by the second device, and the first device does not need to perform calculation. This helps reduce power consumption of the device.

In a possible implementation, the service structure information of the second device indicates a type of service provided by the second device, a function corresponding to the type of service, and location information corresponding to the type of service.

In a possible implementation, the service structure information includes a handle, a category, an identifier, an operation indication, and a descriptor type list.

In a possible implementation, that the service structure hash value of the second device is the same as the service structure hash value of the third device indicates that a service structure of the second device is the same as a service structure of the third device.

According to a second aspect, this application provides a service access method. The method includes: sending first information to a first device, where the first information includes a service structure hash value of a third device, and the first information indicates the first device to determine whether a service structure hash value of a second device is the same as the service structure hash value of the third device. For beneficial effects of the second aspect, refer to the content described in the first aspect.

In a possible implementation, the sending first information to a first device specifically includes: receiving a first request sent by the first device, where the first request is used to request the first information; and sending the first information to the first device.

In a possible implementation, the sending first information to a first device specifically includes: broadcasting the first information.

According to a third aspect, this application provides a service access method. The method includes: obtaining service structure information of a second device from the second device; obtaining a vendor ID VID, a product ID PID, and a service version number of the second device from the second device; sending a third request to a third device, where the third request is used to request to obtain third information, and the third information includes a VID, a PID, and a version of the third device; receiving the third information sent by the third device; and when the VID of the third device is the same as the VID of the second device, the PID of the third device is the same as the PID of the second device, and the service version number of the third device is the same as the service version number of the second device, accessing a service of the third device.

Based on the method, time for a first device to access the service of the third device is reduced, and a transmission resource is also saved. When the first device accesses services of a large quantity of homogeneous devices, time for accessing a service by the first device may be significantly shortened.

In a possible implementation, the service structure information of the second device indicates a type of service provided by the second device, a function corresponding to the type of service, and location information corresponding to the type of service.

In a possible implementation, the service structure information includes a handle, a category, an identifier, an operation indication, and a descriptor type list.

In a possible implementation, that the VID of the third device is the same as the VID of the second device, the PID of the third device is the same as the PID of the second device, and the service version number of the third device is the same as the service version number of the second device indicates that a service structure of the second device is the same as a service structure of the third device.

According to a fourth aspect, this application provides a communication apparatus. The apparatus may be a first device, or may be an apparatus in a first device, or an apparatus that can be matched with a first device for use. Alternatively, the communication apparatus may be a chip system. The communication apparatus may perform the method according to the first aspect or the third aspect. A function of the communication apparatus may be implemented by hardware, or may be implemented by hardware executing corresponding software. The hardware or software includes one or more units or modules corresponding to the foregoing function. The unit or module may be software and/or hardware. For operations performed by the communication apparatus and beneficial effects thereof, refer to the method in the first aspect or the third aspect, and the beneficial effects thereof. Repeated parts are not described in detail.

According to a fifth aspect, this application provides a communication apparatus. The apparatus may be a second device, or may be an apparatus in a second device, or an apparatus that can be matched with a second device for use. The communication apparatus may perform the method according to the second aspect. A function of the communication apparatus may be implemented by hardware, or may be implemented by hardware executing corresponding software. The hardware or software includes one or more units or modules corresponding to the foregoing function. The unit or module may be software and/or hardware. For operations performed by the communication apparatus and beneficial effects thereof, refer to the method in the second aspect and the beneficial effects thereof. Repeated parts are not described in detail.

According to a sixth aspect, this application provides a communication apparatus. The communication apparatus includes a processor, and when the processor invokes a computer program in a memory, the method according to any one of the first aspect to the third aspect is performed.

According to a seventh aspect, this application provides a communication apparatus. The communication apparatus includes a processor and a memory. The processor is coupled to the memory. The processor is configured to implement the method according to any one of the first aspect to the third aspect.

According to an eighth aspect, this application provides a communication apparatus. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor is configured to implement the method according to any one of the first aspect to the third aspect through a logic circuit or by executing code instructions.

According to a ninth aspect, this application provides a computer-readable storage medium. The storage medium stores a computer program or instructions. When a communication apparatus executes the computer program or the instructions, the method according to any one of the first aspect to the third aspect is implemented.

According to a tenth aspect, this application provides a computer program product including instructions. When a computer reads and executes the computer program product, the computer is enabled to perform the method according to any one of the first aspect to the third aspect.

## BRIEF DESCRIPTION OF DRAWINGS

FIG. 1 is a diagram of a topological relationship of in-vehicle communication links according to an embodiment of this application;

FIG. 2 is a schematic flowchart of a service access method according to an embodiment of this application;

FIG. 3 is a representation diagram of a service structure hash value according to an embodiment of this application;

FIG. 4 is a representation diagram of a service structure hash value in a broadcast data unit according to an embodiment of this application;

FIG. 5 is a schematic flowchart of another service access method according to an embodiment of this application;

FIG. 6 is a schematic diagram of a structure of a communication apparatus according to an embodiment of this application;

FIG. 7 is a schematic diagram of a structure of another communication apparatus according to an embodiment of this application; and

FIG. 8 is a schematic diagram of a structure of a chip according to an embodiment of this application.

## DESCRIPTION OF EMBODIMENTS

The following further describes in detail embodiments of this application with reference to accompanying drawings.

A communication apparatus in embodiments of this application may be a vehicle-mounted device such as a head unit, an in-vehicle speaker, an in-vehicle microphone, a battery management system (battery management system, BMS), a battery unit, a battery management unit (battery management unit, BMU), or a battery pack (including a plurality of battery units), or may be an electronic device such as a mobile phone, a tablet computer, a desktop or laptop computer, an ultra-mobile personal computer (ultra-mobile personal computer, UMPC), a netbook, a wearable electronic device, or a virtual reality device.

For example, the apparatus in embodiments of this application may be alternatively another intelligent terminal that is different from a vehicle and that has a function that can be implemented by the information transmission apparatus in embodiments of this application, or may be disposed in another intelligent terminal that is different from a vehicle and that has a function that can be implemented by the information transmission apparatus in embodiments of this application, or may be disposed in a component of the intelligent terminal. The intelligent terminal may be another terminal device such as an intelligent transportation device, a smart home device, or a robot. The apparatus includes but is not limited to an intelligent terminal or another sensor such as a controller, a chip, a radar, or a camera in an intelligent terminal, another component, and the like. Alternatively, the apparatus in embodiments of this application may be a functional module, for example, a chip system, disposed in any one of the foregoing devices.

The following first describes some terms in embodiments of this application, to help a person skilled in the art have a better understanding.

(1) Cockpit domain controller (cockpit domain controller, CDC): The CDC is briefly referred to as a head unit. In addition to conventional radio, music time-frequency playback, and navigation functions, the current head unit has a cellular communication function (3G, 4G, or the like), and can implement information communication between a person and a vehicle and between the vehicle and the outside world in combination with a controller area network (controller area network, CAN)-bus (BUS) technology of the vehicle. This enhances functions related to user experience, services, and safety.

(2) Access device and service device: The access device may communicate with the service device, and has a function of accessing a service of the service device. The service device may provide a corresponding service for the access device. For example, the access device is a battery management unit, and the service device is a battery unit. The battery management unit may access a service of the battery unit, and the service of the battery unit is to provide status information of the battery unit. The battery management unit can obtain the status information of the battery unit through the service provided by the battery unit, to manage each battery unit more intelligently subsequently.

(3) Service structure: The service structure describes a type of service provided by a service device, a function corresponding to the type of service, and location information corresponding to the type of service. The type of service means a category of a service provided by the service device. For example, the type of service may include a thermometer service, a hygrometer service, and a battery status service. The function corresponding to the type of service is to specifically describe content of the service provided by the service device, to be specific, function description fields corresponding to the type of service. The location information corresponding to the type of service includes a start location of the service in a server and locations of the function description fields in the server.

(4) Homogeneous device: Homogeneous devices are devices that have a same service structure. For example, it is assumed that service functions provided by both a battery unit 1 and a battery unit 2 are to provide status information of a battery unit, and services of the battery unit 1 and the battery unit 2 are located at a same location in a server (start locations of the services of the battery unit 1 and the battery unit 2 are the same in the server, and locations of function description fields in the server are the same), that is, service structures of the battery unit 1 and the battery unit 2 are the same, it may be determined that the battery unit 1 and the battery unit 2 are homogeneous devices of each other.

(5) Service discovery: The service discovery is a process in which signaling interaction needs to be performed, before a service is accessed, in a manner specified in a protocol to obtain and parse a service structure of a device. For example, when a first device needs to access a service on a second device, the first device needs to perform signaling interaction with the second device in a manner specified in a protocol, to obtain and parse a service structure provided by the second device. Then, the first device can normally access the service on the second device.

(6) Service structure hash value: The service structure hash value is a value calculated by using a hash function based on a field that describes a service structure. The service structure hash value can be used to verify whether a buffered copy is valid. The buffered copy is service data buffered by a first device after the first device performs service discovery on a second device for a first time. The service data includes a service structure of the second device. Service structure hash values of homogeneous devices are the same. For example, if the second device and a third device are homogeneous devices of each other, service structure hash values of the second device and the third device are also the same. In a conventional technology, a service device does not necessarily have a service structure hash value. If the service device does not have the service structure hash value, an access device cannot obtain the service structure hash value from the service device. When the access device accesses a service of the service device for a second time, the access device may directly access the service without verifying whether the buffered copy is valid by using the service structure hash value. If the service device has the service structure hash value, the access device may obtain the service structure hash value from the service device. When the access device accesses a service of the service device for a second time, the access device can access the service only after verifying, by using the service structure hash value, that the buffered service copy is valid. Generally, if a service on a device may change, there is a service structure hash value in the service. If the service does not change, there is no service structure hash value.

(7) The terms "system" and "network" may be used interchangeably in embodiments of this application. "At least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between associated objects. "At least one of the following items (pieces)" or a similar expression thereof means any combination of these items, including a singular item (piece) or any combination of plural items (pieces). For example, at least one item (piece) of a, b, or c may indicate a, b, c, a and b, a and c, b and c, or a, b, and c, where a, b, and c may be singular or plural.

In addition, unless otherwise specified, ordinal numbers such as "first" and "second" in embodiments of this application are intended to distinguish between a plurality of objects, but are not intended to limit sizes, content, a sequence, a time sequence, priorities, importance, or the like of the plurality of objects. For example, a first character string and a second character string are merely names given for ease of description, and the two character strings may be a same character string, or may be different character strings. Names such as "first" and "second" do not indicate that the two character strings have different sizes, content, sending sequences, priorities, importance, or the like.

The foregoing describes some terms in embodiments of this application. The following describes technical features in embodiments of this application.

Due to diversified in-vehicle applications, there are increasingly more in-vehicle communication nodes and increasingly more types of the in-vehicle communication nodes. This puts forward a higher requirement for an in-vehicle communication capability. Compared with existing wired communication, in-vehicle wireless communication can further reduce a quantity of harnesses, a length of a harness, and a weight of a harness in a vehicle, and corresponding installation or maintenance costs. This makes in-vehicle communication technologies gradually develop toward wireless.

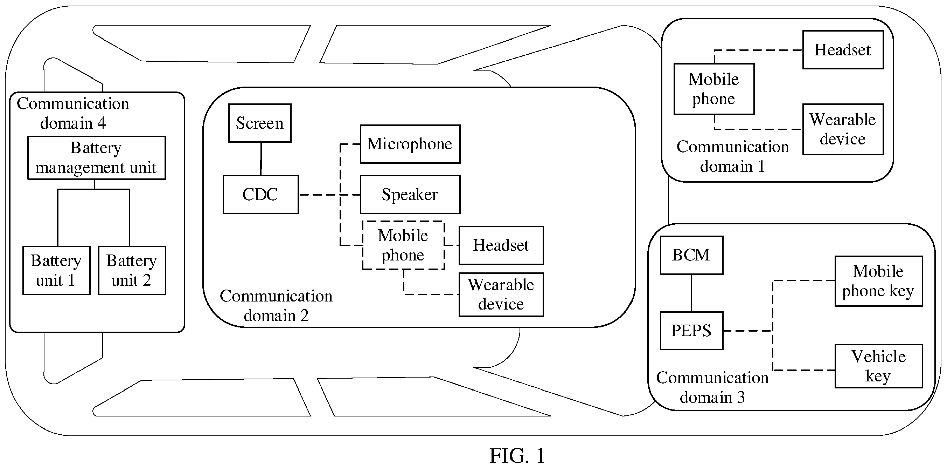

Generally, a topological relationship of in-vehicle communication links is shown in FIG. 1. It can be learned from FIG. 1 that there are a plurality of communication domains in a vehicle. One of the communication domains includes one master node and at least one slave node. The master node schedules the slave node, to transmit service data between the master node and the slave node. For example, in FIG. 1, a mobile phone, a headset, and a wearable device belong to one communication domain, for example, referred to as a communication domain 1, where the mobile phone is a master node, and the headset and the wearable device are slave nodes; a cockpit domain controller CDC, a display, a microphone, and a speaker belong to one communication domain, for example, referred to as a communication domain 2, where the CDC is a master node, and the display, the microphone, and the speaker are slave nodes; a passive entry passive start (passive entry passive start, PEPS) system, a body control module (body control module, BCM), a mobile phone key, and a vehicle key belong to one communication domain, for example, referred to as a communication domain 3, where the PEPS system is a master node, and the BCM, the mobile phone key, and the vehicle key are slave nodes; and in a BMS system, a battery management unit and battery units belong to one communication domain, for example, referred to as a communication domain 4, where the battery management unit is a master node, and the battery units are slave nodes. In addition, a master node in one communication domain may be alternatively used as a slave node in another communication domain. For example, the mobile phone in the communication domain 1 may be used as a slave node in the communication domain 2.

As described above, when accessing a service of a service device, an access device first performs service discovery, and buffers service structure information of the service device. However, when the access device accesses services of a large quantity of homogeneous devices, because service structures of the homogeneous devices are the same, a large quantity of time and transmission resources are wasted. As shown in FIG. 1, the communication domain 4 is used as an example. The battery management unit is an access device, both the battery unit 1 and the battery unit 2 are service devices. In addition, because service structures are the same, the battery unit 1 and the battery unit 2 are homogeneous devices of each other. When the battery management unit wants to access services of the battery unit 1 and the battery unit 2, the battery management unit needs to perform service discovery and buffer corresponding service structure information. However, this manner consumes a large amount of time because there are a large quantity of battery units.

To save time and transmission resources, this application provides a service access method. In this embodiment of this application, after performing service discovery on a second device (for example, the battery unit 1), a first device (for example, the battery management unit) buffers a service structure of the second device. Before accessing a service of a third device (for example, the battery unit 2), the first device determines, based on that a service structure hash value of the third device is the same as a service structure hash value of the second device, whether a service structure of the third device is the same as the service structure of the second device. When the first device determines that the service structure of the third device is the same as the service structure of the second device, the first device may directly access the third device without performing service discovery. According to this method, time required for the first device to access the service of the third device is reduced.

A wireless communication scenario to which the technical solution provided in this embodiment of this application is applied may include wide area wireless communication, for example, communication between a network device and a plurality of terminal devices, or may include an in-vehicle wireless communication scenario, for example, communication between a battery management unit and a plurality of battery units, communication between a microphone management unit and a plurality of microphones, communication between a multi-channel speaker management unit and a plurality of speakers. Alternatively, the wireless communication scenario may include local area wireless communication, for example, communication between a plurality of access points (access points, APs) and a station (station).

For example, if the technical solution provided in this embodiment of this application is applied to the in-vehicle wireless communication scenario, a network architecture shown in FIG. 1 may be a network architecture applied in this embodiment of this application. If the technical solution provided in this embodiment of this application is applied to another wide area wireless communication scenario or local area wireless communication scenario, the network architecture applied in this embodiment of this application may correspondingly change.

The following describes in detail the service access method provided in this application.

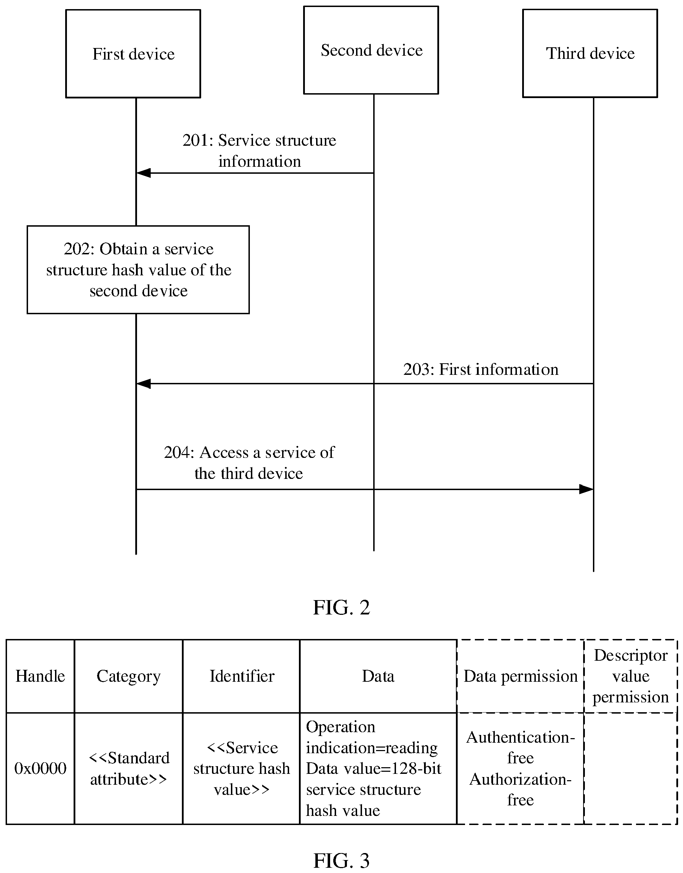

FIG. 2 is a schematic flowchart of a service access method according to an embodiment of this application. As shown in FIG. 2, the service access method includes the following step 201 to step 204. The method shown in FIG. 2 is performed by a first device and a third device. Alternatively, the method shown in FIG. 2 may be performed by a chip in a first device and a chip in a third device. In FIG. 2, the first device and the third device are used as an example for description. An execution body of a subsequent flowchart is similar. Details are not described subsequently.

201: The first device obtains service structure information of a second device from the second device.

In this embodiment of this application, the first device is an access device, and may access a service of a service device. The second device is a service device, and may provide a corresponding service for the access device. For example, the first device may be a battery management unit, the second device may be a battery unit, and a service of the second device is to provide a battery status of the second device, for example, battery level information. When the battery management unit accesses the service of the battery unit, the battery unit feeds back current battery level information to the battery management unit, so that the battery management unit can manage the battery unit based on the current battery level information.

In this embodiment of this application, the service structure information may indicate a service structure, to be specific, a type of service provided by the service device, a function corresponding to the type of service, and location information corresponding to the type of service. After obtaining the service structure information of the second device, the access device may access the service corresponding to the second device.

The service structure information includes a handle, a category, an identifier, an operation indication, and a descriptor type list. Alternatively, the service structure information includes a service structure member. The service structure member is presented in a form of an entry, and the entry includes a handle, a category, an identifier, data, and a descriptor. In a possible implementation, the service structure member includes content that describes the type of service, the function corresponding to the type of service, and the location information corresponding to the type of service. The data includes an operation indication, a data value, and an optional quantity of descriptors. The descriptor includes a descriptor type and a descriptor value. The handle is an index number that is of an entry and that is generated by a server, and indicates a location of the entry in the server. The category indicates information of a type of a service structure member carried by the entry and information of standard and customized types. The identifier indicates specific content described by the entry, and is indicated by a universally unique identifier (Universally Unique Identifier, UUID). The operation indication is used to specify an access manner of the data value and the descriptor value. The descriptor type list indicates a type list of all descriptors carried in the entry.

In a possible implementation, the first device may obtain the service structure information of the second device through service discovery. Specific steps are as follows: The first device sends service discovery request information to the second device, where the service discovery request information is used to request the service structure information; the second device sends the service structure information to the first device; and the first device buffers the service structure information of the second device. Based on this implementation, after obtaining the service structure information of the second device, the first device can determine a service provided by the second device, and perform access. In addition, after the first device buffers the service structure information of the second device, when the first device accesses the service of the second device again, the first device may obtain the service structure information of the second device without performing service discovery again because the first device already knows the service structure information of the second device. This helps the first device perform service access more quickly.

202: The first device obtains a service structure hash value of the second device.

In this embodiment of this application, the service structure hash value is a value obtained by calculating a service structure by using a hash function, and may be used to verify whether the service structure information changes. The service structure hash value corresponds to the service structure. Devices with same service structure hash values have same service structures. Devices with different service structure hash values have different service structures. For example, the service structure hash value of the second device is the same as a service structure hash value of the third device. Therefore, a service structure of the second device is also the same as a service structure of the third device.

The service structure hash value can be calculated by using the following formula:

$$s = H(m) \tag{1}$$

In the formula, $s$ is a service structure hash value, a function $H$ is a hash function, and $m$ is a parameter included in the service structure information, such as a handle, a category, an identifier, an operation indication, and a descriptor type list.

In this embodiment of this application, each service device (for example, the second device or the third device) has a corresponding service structure hash value. When each service device has a service structure hash value, the access device can obtain the service structure hash value of each service device through signaling, so that the access device can verify, by using the service structure hash value, whether a buffered service copy is valid. The service structure hash value is defined on a fixed index value as a separate entry. The service structure hash value is represented on the server as shown in FIG. 3. The service structure hash value is represented in a form of an entry in the server. The entry includes a handle, a category, an identifier, data, data permission, and descriptor value permission. The handle, the category, and the identifier herein are the same as those described in step 201. The service structure is correspondingly described in step 201, and the service structure hash value is correspondingly described herein. Details are not described again in this embodiment of this application. In this case, the category of the entry is a standard attribute. The identifier of the entry is a service structure hash value, and indicates that content of the entry includes the service structure hash value. The data includes an operation indication and a data value, where the operation indication is reading, and indicates that the service structure hash value corresponding to the service device may be obtained from the server in a reading manner, and the data value indicates a specific 128-bit service structure hash value. The permission is invisible to a client. The data permission is usually authentication-free and authorization-free. The service structure hash value does not carry a descriptor, so the descriptor value permission is unavailable.

That the first device obtains a service structure hash value of the second device may be implemented in two manners.

In one manner, the first device actively calculates the service structure hash value of the second device, to be specific, the first device calculates the service structure information of the second device by using a hash function to obtain the service structure hash value of the second device. The first device may calculate the service structure hash value of the second device in a manner indicated by the foregoing formula (1). In this manner, the first device can actively calculate the service structure hash value without performing data transmission. This helps obtain the service structure hash value of the second device more flexibly, and save a transmission resource.

In another manner, the first device sends a second request to the second device, where the second request is used to request to obtain second information, and the second information includes the service structure hash value of the second device; and the first device receives the second information from the second device. In this manner, the service structure hash value that is of the second device and that is obtained by the first device is calculated by the second device, and the first device does not need to perform calculation. This helps reduce power consumption of the device.

203: The first device obtains first information from the third device.

In this embodiment of this application, the first information includes the service structure hash value. After obtaining the service structure hash value of the second device, the first device may verify, by obtaining service structure hash value information of the third device, whether the second device and the third device are homogeneous devices. When the service structure hash value of the second device is the same as the service structure hash value of the third device, it indicates that the second device and the third device are homogeneous devices. When the service structure hash value of the second device is different from the service structure hash value of the third device, it indicates that the second device and the third device are not homogeneous devices. After it is determined that the second device and the third device are homogeneous devices of each other, and the first device buffers the service structure information of the second device, the first device does not need to obtain service structure information of the third device, and may determine the service structure of the third device based on the service structure information of the second device, and access a service of the third device. This helps reduce time for the first device to access the service of the third device.

That the first device obtains first information from the third device may be implemented in two manners.

In one manner, the first device sends a first request to the third device, where the first request is used to request to obtain the first information; and the third device sends the first information to the first device. Based on this implementation, the first device may obtain the first information more flexibly.

In another manner, the first device receives the first information broadcast by the third device. Based on this implementation, the first device may directly receive the first information broadcast by the third device without actively sending a request, thereby reducing overheads of the first device.

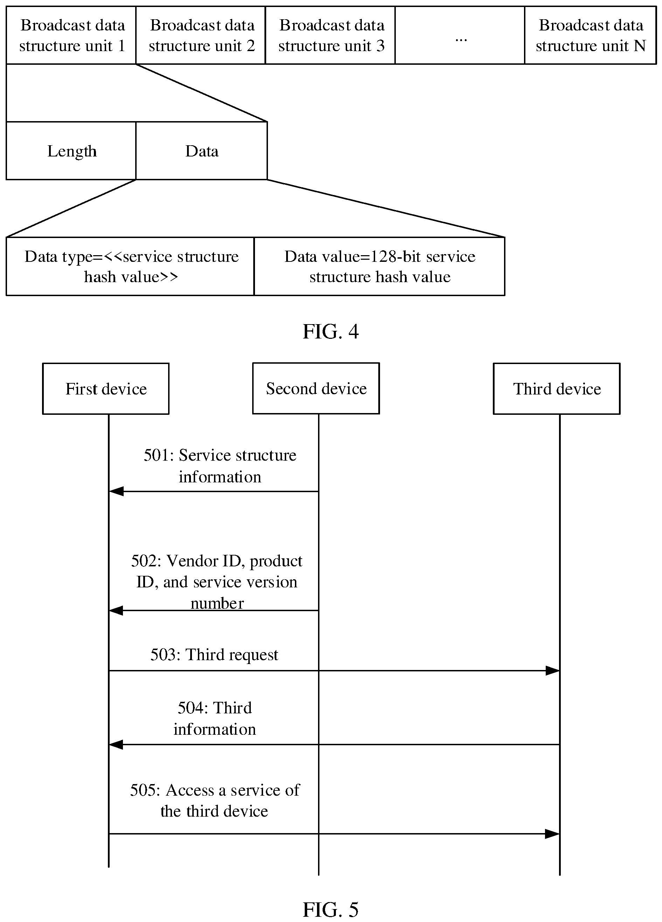

Optionally, the service structure hash value is represented in broadcast data units as shown in FIG. 4. In the plurality of broadcast data units sent by the third device, there is a specific data unit that carries the service structure hash value, for example, a broadcast data unit 1. FIG. 4 is merely an example. A location of the service structure hash value in the broadcast data units is flexible. For example, a broadcast data unit 2 may alternatively carry the service structure hash value. This is not limited in this embodiment of this application. The broadcast data unit that carries the service structure hash value includes a length and data. The length indicates a size of the data. The data includes a data type and a data value. The data type indicates that a type of the current data unit is the service structure hash value, and indicates that the current broadcast data structure unit 1 carries the service structure hash value. The data value is a specific 128-bit service structure hash value.

Optionally, the foregoing two manners may be combined with each other. For example, when the first device receives the first information broadcast by the third device, the first device does not need to send the first request to obtain the first information; or when the first device does not receive the first information broadcast by the third device, the first device actively sends the first request to the third device to obtain the first information. Based on this implementation, the first device can obtain the first information more quickly.

204: The first device accesses the service of the third device.

In this embodiment of this application, after verifying that the service structure hash value of the third device is the same as the service structure hash value of the second device, the first device accesses the service of the third device. Because the first device verifies that the service structure hash value of the third device is the same as the service structure hash value of the second device, it may be determined that the service structure of the third device is the same as the service structure of the second device. Because the first device buffers the service structure information of the second device, the first device does not need to obtain the service structure information of the third device, and may determine the service structure of the third device based on the service structure information of the second device, and access the service of the third device. According to the method described in this application, time for accessing the service of the third device is reduced. When the first device accesses services of a large quantity of homogeneous devices, time for accessing a service by the first device may be significantly shortened.

In a possible implementation, if the service structure hash value of the third device is different from the service structure hash value of the second device, the first device performs service access after performing service discovery on the third device. For example, after determining that the service structure hash value of the second device is different from the service structure hash value of the third device, the first device sends service discovery request information to the third device, where the service discovery request information is used to request the service structure information; the third device sends the service structure information to the first device; and the first device buffers the service structure information of the third device, and accesses the service of the third device. Based on this implementation, when the service structure of the third device is different from the service structure of the second device, the first device can access the service of the third device after obtaining the service structure information of the third device. This helps avoid an access failure when the first device accesses the service of the third device.

FIG. 5 is a schematic flowchart of another service access method according to an embodiment of this application. As shown in FIG. 5, the service access method includes the following step 501 to step 505.

501: A first device obtains service structure information of a second device from the second device.

A specific implementation of step 501 is the same as that of step 201. Details are not described in this embodiment of this application.

502: The first device obtains a vendor ID, a product ID, and a service version number of the second device from the second device.

In this embodiment of this application, the vendor ID (Vendor ID, VID) is a serial number corresponding to a vendor of a device at delivery, the product ID (Product ID, PID) is a serial number of a product category corresponding to the device, and the service version number (Version) is a serial number corresponding to a version of a service provided by the device. When two service devices have a same VID, a same PID and a same version, service structures of the two service devices are also the same, and the two service devices are homogeneous devices of each other. When one of VIDs, PIDs, and versions of two service devices is different, service structures of the two service devices are different. For example, it is assumed that the VID and the PID of the second device are respectively the same as a VID and a PID of a third device, but the version of the second device is different from a version of the third device, service structures of the third device and the second device are different.

In a possible implementation, a manner in which the first device obtains the VID, the PID, and the version of the second device may be that the first device actively sends request information to request to obtain the VID, the PID, and the version of the second device. For example, the first device sends a fourth request. The fourth request is used to request fourth information. The fourth information includes the VID, the PID, and the version of the second device. After receiving the fourth request, the second device sends the fourth information to the first device.

503: The first device sends a third request to the third device.

In this embodiment of this application, the third request is used to request third information. The third information includes the VID, the PID, and the version of the third device.

504: The third device sends the third information to the first device.

505: The first device accesses a service of the third device.

In this embodiment of this application, when the VID of the third device is the same as the VID of the second device, the PID of the third device is the same as the PID of the second device, and the version of the third device is the same as the version of the second device, the first device accesses the service of the third device. Because the third device and the second device have the same VID, the same PID, and the same version, it indicates that the service structures of the third device and the second device are also the same. The third device and the second device are homogeneous devices of each other, and it may be determined that the service structures of the third device and the second device are the same. Because the first device buffers the service structure information of the second device, the first device does not need to obtain service structure information of the third device, and may determine the service structure of the third device based on the service structure information of the second device, and access the service of the third device. According to the method described in this application, time for accessing the service of the third device is reduced. When the first device accesses services of a large quantity of homogeneous devices, time for accessing a service by the first device may be significantly shortened.

In a possible implementation, if any one or more of the PID, the VID, and the version of the third device are different from those of the second device, the first device performs service discovery on the third device, and then performs service access. For example, when the first device determines that the PID and the VID of the second device are respectively the same as the PID and the VID of the third device, but the version of the second device is different from the version of the third device, the first device determines that the second device and the third device are not homogeneous devices. The first device sends service discovery request information to the third device, where the service discovery request information is used to request the service structure information; the third device sends the service structure information to the first device; and the first device buffers the service structure information of the third device. Based on this implementation, when the service structure of the third device is different from the service structure of the second device, the first device can obtain the service structure information of the third device, thereby avoiding a failure when the first device accesses the service of the third device for a plurality of times.

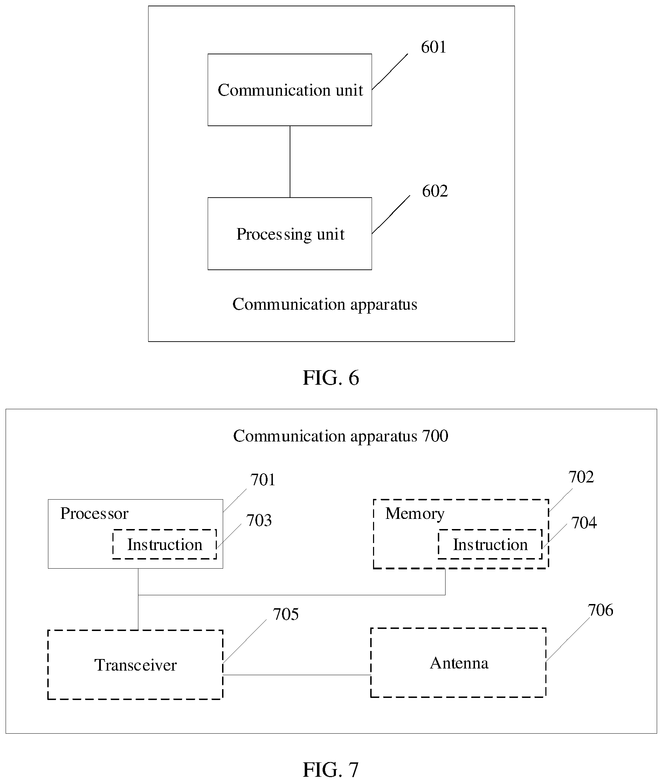

FIG. 6 is a schematic diagram of a structure of a communication apparatus according to an embodiment of this application. The communication apparatus shown in FIG. 6 may be configured to perform some or all functions of the first device in the method embodiment described in FIG. 2. The apparatus may be the first device, or may be an apparatus in the first device, or an apparatus that can be matched with the first device for use. Alternatively, the communication apparatus may be a chip system. The communication apparatus shown in FIG. 6 may include a communication unit 601 and a processing unit 602. The processing unit 602 is configured to perform data processing. A receiving unit and a sending unit are integrated into the communication unit 601. The communication unit 601 may also be referred to as a transceiver unit. Alternatively, the communication unit 601 may be split into a receiving unit and a sending unit. The processing unit 602 below is similar to the communication unit 601. Details are not described below again.

The communication unit 601 is configured to obtain service structure information of a second device from the second device. The processing unit 602 is further configured to obtain a service structure hash value of the second device. The communication unit 601 is further configured to obtain first information from a third device. The first information includes a service structure hash value of the third device. The communication unit 601 is configured to access a service of the third device when the service structure hash value of the second device is the same as the service structure hash value of the third device.

In a possible implementation, when obtaining the first information from the third device, the communication unit 601 is configured to: send a first request to the third device, where the first request is used to request the first information; and receive the first information sent by the third device.

In a possible implementation, when obtaining the first information from the third device, the communication unit 601 is configured to receive the first information broadcast by the third device.

In a possible implementation, when obtaining the service structure hash value of the second device, the processing unit 602 is configured to calculate the service structure information of the second device by using a hash function to obtain the service structure hash value of the second device.

In a possible implementation, when obtaining the service structure hash value of the second device, the processing unit 602 is configured to: send, through the communication unit 601, a second request to the second device, where the second request is used to request second information, and the second information includes the service structure hash value of the second device; and receive, through the communication unit 601, the second information sent by the second device.

In a possible implementation, the service structure information of the second device indicates a type of service provided by the second device, a function corresponding to the type of service, and location information corresponding to the type of service.

In a possible implementation, the service structure information includes a handle, a category, an identifier, an operation indication, and a descriptor type list.

In a possible implementation, that the service structure hash value of the second device is the same as the service structure hash value of the third device indicates that a service structure of the second device is the same as a service structure of the third device.

For another possible implementation of the communication apparatus, refer to related descriptions of the functions of the first device in the method embodiment corresponding to FIG. 2. Details are not described herein.

The communication apparatus shown in FIG. 6 may be alternatively configured to perform some or all functions of the third device in the method embodiment described in FIG. 2. The apparatus may be the third device, or may be an apparatus in the third device, or an apparatus that can be matched with the third device for use. Alternatively, the communication apparatus may be a chip system. The communication apparatus shown in FIG. 6 may include a communication unit 601 and a processing unit 602.

The communication unit 601 is configured to send first information to a first device. The first information includes a service structure hash value of the first device. The first information indicates the first device to determine whether the service structure hash value of the first device is the same as a service structure hash value of the third device.

In a possible implementation, when sending the first information to the first device, the communication unit 601 is configured to: receive a first request sent by the first device, where the first request is used to request the first information; and send the first information to the first device.

In a possible implementation, when sending the first information to the first device, the communication unit 601 is configured to broadcast the first information.

In a possible implementation, service structure information of a second device indicates a type of service provided by the second device, a function corresponding to the type of service, and location information corresponding to the type of service.

In a possible implementation, the service structure information includes a handle, a category, an identifier, an operation indication, and a descriptor type list.

In a possible implementation, that a service structure hash value of the second device is the same as the service structure hash value of the third device indicates that a service structure of the second device is the same as a service structure of the third device.

For another possible implementation of the communication apparatus, refer to related descriptions of the functions of the third device in the method embodiment corresponding to FIG. 2. Details are not described herein.

The communication apparatus shown in FIG. 6 may be alternatively configured to perform some or all functions of the first device in the method embodiment described in FIG. 5. The apparatus may be the first device, or may be an apparatus in the first device, or an apparatus that can be matched with the first device for use. Alternatively, the communication apparatus may be a chip system. The communication apparatus shown in FIG. 6 may include a communication unit 601 and a processing unit 602.

The communication unit 601 is configured to obtain service structure information of the second device from the second device. The communication unit 601 is further configured to obtain a vendor ID VID, a product ID PID, and a service version number of the second device. The communication unit 601 is further configured to send a third request to a third device. The third request is used to request to obtain third information. The third information includes a VID, a PID, and a service version number of the third device. The communication unit 601 is further configured to receive the third information sent by the third device. The communication unit 601 is configured to: when the VID of the third device is the same as the VID of the second device, the PID of the third device is the same as the PID of the second device, and the service version number of the third device is the same as the service version number of the second device, access a service of the third device.

In a possible implementation, the service structure information of the second device indicates a type of service provided by the second device, a function corresponding to the type of service, and location information corresponding to the type of service.

In a possible implementation, the service structure information includes a handle, a category, an identifier, an operation indication, and a descriptor type list.

In a possible implementation, that the VID of the third device is the same as the VID of the second device, the PID of the third device is the same as the PID of the second device, and the service version number of the third device is the same as the service version number of the second device indicates that a service structure of the second device is the same as a service structure of the third device.

For another possible implementation of the communication apparatus, refer to related descriptions of the functions of the first device in the method embodiment corresponding to FIG. 5. Details are not described herein.

FIG. 7 is a schematic diagram of a structure of a communication apparatus. The communication apparatus 700 may be the first device or the third device in the foregoing method embodiments, or may be a chip, a chip system, a processor, or the like that supports the first device or the third device in implementing the foregoing methods. The communication apparatus may be configured to implement the methods described in the foregoing method embodiments. For details, refer to the descriptions in the foregoing method embodiments.

The communication apparatus 700 includes one or more processors 701. The processor 701 may be a general-purpose processor, a dedicated processor, or the like. For example, the processor 701 may be a baseband processor or a central processing unit. The baseband processor may be configured to process a communication protocol and communication data. The central processing unit may be configured to control a communication apparatus (for example, a base station, a baseband chip, a terminal, a terminal chip, a DU, or a CU), execute a software program, and process data of the software program.

Optionally, the communication apparatus 700 may include one or more memories 702. The memory 702 may store instructions 704. The instructions may be run on the processor 701, to enable the communication apparatus 700 to perform the methods described in the foregoing method embodiments. Optionally, the memory 702 may further store data. The processor 701 and the memory 702 may be separately disposed, or may be integrated together.

Optionally, the communication apparatus 700 may further include a transceiver 705 and an antenna 706. The transceiver 705 may be referred to as a transceiver unit, a transceiver machine, a transceiver circuit, or the like, and is configured to implement receiving and sending functions. The transceiver 705 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 700 is a first device or a third device. The processor 701 is configured to perform a data processing operation of the first device or the third device in the foregoing method embodiments. The transceiver 705 is configured to perform data receiving and sending operations of the first device in the foregoing method embodiments.

In another possible design, the processor 701 may include a transceiver configured to implement receiving and sending functions. For example, the transceiver unit may be a transceiver circuit, an interface, or an interface circuit. A transceiver circuit, an interface, or an interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 701 may store instructions 703. The instructions 703 are run on the processor 701, to enable the communication apparatus 700 to perform the methods described in the foregoing method embodiments. The instructions 703 may be built into the processor 701. In this case, the processor 701 may be implemented by hardware.

In yet another possible design, the communication apparatus 700 may include a circuit. The circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit RFIC, a mixed signal IC, an application-specific integrated circuit (application-specific integrated circuit, ASIC), a printed circuit board (printed circuit board, PCB), an electronic device, or the like.

The communication apparatus described in the foregoing embodiment may be a first device or a third device. However, a scope of the communication apparatus described in this embodiment of this application is not limited thereto, and the communication apparatus may not be limited to the structure shown in FIG. 7. The communication apparatus may be an independent device or may be a part of a large device. For example, the communication apparatus may be implemented in the following form:

(1) an independent integrated circuit IC, a chip, a chip system, or a subsystem;
(2) a set including one or more ICs, where optionally, the set of ICs may also include a storage component configured to store data and instructions;
(3) an ASIC, for example, a modem (MSM);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) others.

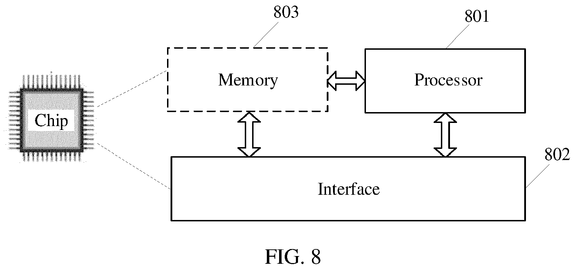

For the communication apparatus implemented in the form of a chip or a chip system, refer to a schematic diagram of a structure of a chip shown in FIG. 8. The chip shown in FIG. 8 includes a processor 801 and an interface 802. Optionally, the chip may further include a memory 803. There may be one or more processors 801, and there may be a plurality of interfaces 802.

In a design, a case in which the chip is configured to implement the functions of the first device in embodiments of this application is as follows:

The interface 802 is configured to receive or output a signal; and the processor 801 is configured to perform a data processing operation of the first device in the foregoing method embodiments.

In another design, a case in which the chip is configured to implement the functions of the third device in embodiments of this application is as follows:

The interface 802 is configured to receive or output a signal; and the processor 801 is configured to perform a data processing operation of the third device in the foregoing method embodiments.

It may be understood that, in some scenarios, some optional features in embodiments of this application may be independently implemented without depending on another feature, for example, a solution on which the optional features are currently based, to resolve a corresponding technical problem and achieve corresponding effect. Alternatively, in some scenarios, the optional features may be combined with another feature based on a requirement. Correspondingly, the communication apparatus provided in this embodiment of this application may also implement these features or functions. Details are not described herein.

It should be understood that the processor in this embodiment of this application may be an integrated circuit chip and has a signal processing capability. In an implementation process, steps in the foregoing method embodiments may be implemented by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any other proper types of memories.

This application further provides a computer-readable medium, configured to store computer software instructions. When the instructions are executed by a communication apparatus, functions in any one of the foregoing method embodiments are implemented.

This application further provides a computer program product, configured to store computer software instructions. When the instructions are executed by a communication apparatus, functions in any one of the foregoing method embodiments are implemented.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid state disk (solid state disk, SSD)), or the like.

An embodiment of this application further provides a computer program product. When the computer program product is run on a processor, method procedures in the foregoing method embodiments are implemented.

Descriptions of embodiments provided in this application may be mutually referenced, and the description of each embodiment has respective focuses. For a part that is not described in detail in an embodiment, refer to related descriptions in other embodiments. For ease and brevity of description, for example, for functions of the apparatuses and devices provided in embodiments of this application and operations performed by the apparatuses and devices, refer to related descriptions of the method embodiments of this application. Mutual reference, combination, or citation may also be made between the method embodiments and between the apparatus embodiments.

**Claims**

1. A service access method, applied to a first device, wherein the method comprises:

obtaining service structure information of a second device from the second device;
obtaining a service structure hash value of the second device;
obtaining first information from a third device, wherein the first information comprises a service structure hash value of the third device; and

when the service structure hash value of the second device is the same as the service structure hash value of the third device, accessing a service of the third device.

2. The method according to claim 1, wherein the obtaining first information from a third device comprises:

   sending a first request to the third device, wherein the first request is used to request the first information; and receiving the first information sent by the third device.

3. The method according to claim 1, wherein the obtaining first information from a third device comprises: receiving the first information broadcast by the third device.

4. The method according to any one of claims 1 to 3, wherein the obtaining a service structure hash value of the second device comprises:
   calculating the service structure information of the second device by using a hash function to obtain the service structure hash value of the second device.

5. The method according to any one of claims 1 to 3, wherein the obtaining a service structure hash value of the second device comprises:

   sending a second request to the second device, wherein the second request is used to request second information, and the second information comprises the service structure hash value of the second device; and receiving the second information sent by the second device.

6. The method according to any one of claims 1 to 5, wherein the service structure information of the second device indicates a type of service provided by the second device, a function corresponding to the type of service, and location information corresponding to the type of service.

7. The method according to any one of claims 1 to 6, wherein the service structure information comprises a handle, a category, an identifier, an operation indication, and a descriptor type list.

8. The method according to any one of claims 1 to 7, wherein that the service structure hash value of the second device is the same as the service structure hash value of the third device indicates that a service structure of the second device is the same as a service structure of the third device.

9. A service access method, applied to a third device, wherein the method comprises:

   sending first information to a first device, wherein
   the first information comprises a service structure hash value of the third device, and the first information indicates the first device to determine whether a service structure hash value of a second device is the same as the service structure hash value of the third device.

10. The method according to claim 9, wherein the sending first information to a first device comprises:

    receiving a first request sent by the first device, wherein the first request is used to request the first information; and sending the first information to the first device.

11. The method according to claim 9, wherein the sending first information to a first device comprises: broadcasting the first information.

12. A communication apparatus, wherein the communication apparatus comprises a communication unit and a processing unit, wherein

    the communication unit is configured to obtain service structure information of a second device from the second device;
    the processing unit is configured to obtain a service structure hash value of the second device;
    the communication unit is further configured to obtain first information from a third device, wherein the first information comprises a service structure hash value of the third device; and
    the communication unit is further configured to: when the service structure hash value of the second device is the same as the service structure hash value of the third device, access a service of the third device.

13. The communication apparatus according to claim 12, wherein that the communication unit is further configured to obtain first information from a third device comprises:
the communication unit is further configured to:

send a first request to the third device, wherein the first request is used to request the first information; and receive the first information sent by the third device.

14. The communication apparatus according to claim 12, wherein that the communication unit is further configured to obtain first information from a third device comprises:
the communication unit is further configured to receive the first information broadcast by the third device.

15. The communication apparatus according to any one of claims 12 to 14, wherein that the processing unit is configured to obtain a service structure hash value of the second device comprises:
the processing unit is further configured to calculate the service structure information of the second device by using a hash function to obtain the service structure hash value of the second device.

16. The communication apparatus according to any one of claims 12 to 14, wherein that the processing unit is configured to obtain a service structure hash value of the second device comprises:
the processing unit is further configured to:

send, through the communication unit, a second request to the second device, wherein the second request is used to request second information, and the second information comprises the service structure hash value of the second device; and
receive, through the communication unit, the second information sent by the second device.

17. The communication apparatus according to any one of claims 12 to 16, wherein the service structure information of the second device indicates a type of service provided by the second device, a function corresponding to the type of service, and location information corresponding to the type of service.

18. The communication apparatus according to any one of claims 12 to 17, wherein the service structure information comprises a handle, a category, an identifier, an operation indication, and a descriptor type list.

19. The communication apparatus according to any one of claims 12 to 18, wherein that the service structure hash value of the second device is the same as the service structure hash value of the third device indicates that a service structure of the second device is the same as a service structure of the third device.

20. A communication apparatus, wherein the communication apparatus comprises a communication unit, wherein

the communication unit is configured to send first information to a first device, wherein
the first information comprises a service structure hash value of a third device, and the first information indicates the first device to determine whether a service structure hash value of a second device is the same as the service structure hash value of the third device.

21. The communication apparatus according to claim 20, wherein that the communication unit is configured to send first information to a first device comprises:
the communication unit is further configured to:

receive a first request sent by the first device, wherein the first request is used to request the first information; and
send the first information to the first device.

22. The communication apparatus according to claim 20, wherein that the communication unit is configured to send first information to a first device comprises:
the communication unit is further configured to broadcast the first information.

23. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 8 through a logic circuit or by executing code instructions, or the processor is configured to implement the method according to any one of claims 9 to 11 through a logic circuit or by executing code instructions.

24. A computer-readable storage medium, wherein the storage medium stores a computer program or instructions, and when a communication apparatus executes the computer program or the instructions, the method according to any one of claims 1 to 8 is implemented, or the method according to any one of claims 9 to 11 is implemented.

FIG. 1

EP 4 395 382 A1

First device

Second device

Third device

201: Service structure information

202: Obtain a service structure hash value of the second device

203: First information

204: Access a service of the third device

FIG. 2

| Handle | Category | Identifier | Data | Data permission | Descriptor value permission |
|--------|----------|-----------|------|-----------------|------------------------------|
| 0x0000 | <<Standard attribute>> | <<Service structure hash value>> | Operation indication=reading Data value=128-bit service structure hash value | Authentication-free Authorization-free | |

FIG. 3

| Broadcast data structure unit 1 | Broadcast data structure unit 2 | Broadcast data structure unit 3 | ... | Broadcast data structure unit N |
|---|---|---|---|---|

| Length | Data |
|---|---|

| Data type=<<service structure hash value>> | Data value=128-bit service structure hash value |
|---|---|

FIG. 4

| First device | Second device | Third device |
|---|---|---|

501: Service structure information

502: Vendor ID, product ID, and service version number

503: Third request

504: Third information

505: Access a service of the third device

FIG. 5

FIG. 6

FIG. 7

FIG. 8

## INTERNATIONAL SEARCH REPORT

| International application No. |
|---|
| **PCT/CN2022/117614** |

**A. CLASSIFICATION OF SUBJECT MATTER**

H04W 4/80(2018.01)i; H04W 48/10(2009.01)i; H04W 76/00(2018.01)i

According to International Patent Classification (IPC) or to both national classification and IPC

**B. FIELDS SEARCHED**

Minimum documentation searched (classification system followed by classification symbols)

H04W4/-, H04W48/-, H04W76/-

Documentation searched other than minimum documentation to the extent that such documents are included in the fields searched

Electronic data base consulted during the international search (name of data base and, where practicable, search terms used)

CNABS; CNTXT; CNKI; BAIDU: 短距离通信, 服务, 发现, 访问, 服务结构, 散列值, 哈希, 第一设备, 第二设备, 外围设备, 相同, 一样, 匹配, 厂商序号, 产品序号, 通用唯一识别码, 句柄, 类别, 标识, 操作指示, 描述符类型, 广播 VEN; USTXT; EPTXT; WOTXT; IEEE: NFC, server, service, discover, access, interact+, hash, first, second, peripheral, match+, same, VID, PID, Universally Unique Identifier, UUID, type, identity, broadcast

**C. DOCUMENTS CONSIDERED TO BE RELEVANT**

| Category* | Citation of document, with indication, where appropriate, of the relevant passages | Relevant to claim No. |
|---|---|---|
| X | US 2020220783 A1 (MICROSOFT TECHNOLOGY LICENSING L.L.C.) 09 July 2020 (2020-07-09) description, paragraphs [0052]-[0060] | 1-24 |
| A | CN 104956761 A (LG ELECTRONICS INC.) 30 September 2015 (2015-09-30) entire document | 1-24 |
| A | CN 112543116 A (HARBIN INSTITUTE OF TECHNOLOGY) 23 March 2021 (2021-03-23) entire document | 1-24 |
| A | CN 108259406 A (CHINA TELECOM CORP., LTD.) 06 July 2018 (2018-07-06) entire document | 1-24 |
| A | US 2016337457 A1 (LG ELECTRONICS INC.) 17 November 2016 (2016-11-17) entire document | 1-24 |
| A | US 2020036806 A1 (INTERNATIONAL BUSINESS MACHINES CORPORATION) 30 January 2020 (2020-01-30) entire document | 1-24 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 November 2022** | **07 December 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

| INTERNATIONAL SEARCH REPORT | International application No. |
| Information on patent family members | PCT/CN2022/117614 |

| Patent document cited in search report | | | Publication date (day/month/year) | Patent family member(s) | | | Publication date (day/month/year) |
|---|---|---|---|---|---|---|---|
| US | 2020220783 | A1 | 09 July 2020 | US | 10887181 | B2 | 05 January 2021 |
| CN | 104956761 | A | 30 September 2015 | JP | 2016504788 | A | 12 February 2016 |
| | | | | EP | 2914047 | A1 | 02 September 2015 |
| | | | | US | 2015296416 | A1 | 15 October 2015 |
| | | | | WO | 2014069868 | A1 | 08 May 2014 |
| | | | | KR | 20150087841 | A | 30 July 2015 |
| | | | | EP | 2914047 | A4 | 11 May 2016 |
| | | | | US | 9521589 | B2 | 13 December 2016 |
| | | | | JP | 6324982 | B2 | 16 May 2018 |
| | | | | CN | 104956761 | B | 10 August 2018 |
| | | | | EP | 2914047 | B1 | 22 April 2020 |
| CN | 112543116 | A | 23 March 2021 | None | | | |
| CN | 108259406 | A | 06 July 2018 | None | | | |
| US | 2016337457 | A1 | 17 November 2016 | WO | 2015111893 | A1 | 30 July 2015 |
| | | | | US | 10129343 | B2 | 13 November 2018 |
| US | 2020036806 | A1 | 30 January 2020 | None | | | |

Form PCT/ISA/210 (patent family annex) (January 2015)

**EP 4 395 382 A1**

**Patent documents cited in the description**

- CN 202111116493